# EUROPEAN PATENT APPLICATION

(11) **EP 4 693 844 A1**
(43) Date of publication of application: **11.02.2026**
(21) Application number: 24780182.2
(22) Date of filing: 25.03.2024
(51) Int. Cl.: H02K 15/02

(54) **MOTOR CORE MANUFACTURING DEVICE AND MOTOR CORE MANUFACTURING METHOD**

(30) Priority: 24.03.2023 JP 2023048548
(71) Applicant: NHK Spring Co., Ltd., Yokohama-shi, Kanagawa 236-0004 (JP)
(72) Inventor: FURUYA, Takumi, Yokohama-shi, Kanagawa 236-0004 (JP); OHMORI, Makoto, Yokohama-shi, Kanagawa 236-0004 (JP); SATO, Kei, Yokohama-shi, Kanagawa 236-0004 (JP)
(74) Representative: DREISS Patentanwälte PartG mbB
(86) International application number: PCT/JP2024/011703
(87) International publication number: WO 2024/204064

(57) **Abstract**

A motor core manufacturing device of the present disclosure includes: a mold that can hold a motor core including plural resin fill portions disposed in an annular form at a predetermined interval, and the mold includes a first mold and a second mold; an annular chamber communicating with resin fill paths, which are formed in the first mold and whose end portions can communicate with the plural resin fill portions respectively, and an annular resin material of a predetermined wall thickness can be accommodated in an interior of the annular chamber; an annular plunger that can move within the annular chamber; and one or plural convex portions projecting toward an inner side of the annular chamber from an inner surface within the annular chamber except at portions that communicate with the resin fill paths.

## Description

### Technical Field

The present disclosure relates to a motor core manufacturing device and a motor core manufacturing method.

### Background Art

There are rotary electric machines in which permanent magnets are respectively mounted within plural slots that are arranged at a predetermined interval in a annular form in a motor core, e.g., a rotor core. As a method of mounting the permanent magnets to the motor core, there is known a method in which the permanent magnets are inserted into the slots, and thereafter, resin is filled in at the peripheries thereof and is hardened.

Japanese Patent No. 6410776 (refer to Fig. 4 through Fig. 6 in particular) describes, at the time of filling a resin into magnet insertion holes of a rotor core and fixing the magnets, placing and filling a resin tablet in the central portion of a gate mold.

### SUMMARY OF INVENTION

### Technical Problem

In the structure described in Japanese Patent No. 6410776, the portion (generally called "pot" or "chamber") of the gate into which the resin tablet is placed is formed at the center of the gate mold, whereas the magnet insertion holes are disposed at the outer peripheral side of the rotor core. The distance between the pot and the magnet insertion holes is long, and the entire length of the gate (also called resin fill path) takes up a long space. If the resin fill path is long in this way, the amount of the resin that hardens outside of the resin fill portions (generally called the "cull") increases, and there is the tendency for the amount of resin that is needed in order to fill the resin in the magnet insertion holes to increase.

The present disclosure provides a motor core manufacturing device and a motor core manufacturing method that suppress the amount of resin that is used.

### Solution to Problem

A motor core manufacturing device relating to a first aspect of the present disclosure includes: a mold that can hold a motor core that includes plural resin fill portions disposed in an annular form at a predetermined interval, and the mold includes a first mold positioned at one end portion side in an axial direction of the motor core, and a second mold positioned at another end portion side in the axial direction of the motor core; an annular chamber communicating with resin fill paths, which are formed in the first mold and whose end portions can communicate with the plural resin fill portions respectively, and an annular resin material of a predetermined wall thickness can be accommodated in an interior of the annular chamber; an annular plunger that can move within the annular chamber; and one or plural convex portions projecting toward an inner side of the annular chamber from an inner surface within the annular chamber, except at portions that communicate with the resin fill paths.

In a motor core manufacturing device such as that described above, due to the convex portion being formed within the chamber, the amount of resin that hardens within the chamber can be reduced, and the amount of resin that is used can be suppressed.

In a motor core manufacturing device relating to a second aspect of the present disclosure, in the above-described motor core manufacturing device relating to the first aspect of the present disclosure, the annular chamber is formed at a position that, as seen in a plan view, overlaps the resin fill portions of the motor core held in the mold, and the resin fill paths are structured by plural passages that extend in a vertical direction from an upper surface or a lower surface of the annular chamber toward the resin fill portions.

In a motor core manufacturing device such as that described above, because the resin fill paths can be made to be short, the amount of resin that hardens outside of the resin fill portions can be made to be small.

In a motor core manufacturing device relating to a third aspect of the present disclosure, in the above-described motor core manufacturing device relating to the first or second aspect of the present disclosure, the convex portion includes first convex portions formed at positions of a surface, which faces the plunger, of the first mold except at regions that communicate with the resin fill paths, and the first convex portions extend in a direction intersecting the surface, which faces the plunger, of the first mold.

In a motor core manufacturing device such as that described above, owing to the first convex portions, the amount of resin that hardens within the chamber can be reduced.

In a motor core manufacturing device relating to a fourth aspect of the present disclosure, in the above-described motor core manufacturing device relating to the third aspect of the present disclosure, side walls of the resin fill paths include tapered surfaces that are inclined at a first angle with respect to an extending direction of the resin fill paths such that diameters thereof become smaller from one openings that communicate with the annular chamber toward another openings that communicate with the plural resin fill portions, and side walls of the first convex portions include tapered surfaces that are inclined at a second angle, which is smaller than the first angle, with respect to the extending direction of the resin fill paths such that surface areas of the first convex portions become smaller toward distal ends of the side walls of the first convex portions.

In a motor core manufacturing device such as that described above, release at the time of releasing the cull from the mold is good.

In a motor core manufacturing device relating to a fifth aspect of the present disclosure, in the above-described motor core manufacturing device relating to the third or fourth aspect of the present disclosure, the convex portions further include second convex portions that are formed at some positions of a surface, which faces the first mold, of the annular plunger except at regions that face the first convex portions, and the second convex portions extend in a direction intersecting the surface, which faces the first mold, of the annular plunger.

In a motor core manufacturing device such as that described above, owing to the first convex portions and the second convex portions, the amount of resin that hardens within the chamber can be reduced even more.

In a motor core manufacturing device relating to a sixth aspect of the present disclosure, in the above-described motor core manufacturing device relating to the fifth aspect of the present disclosure, side walls of the resin fill paths include tapered surfaces that are inclined at a first angle with respect to an extending direction of the resin fill paths such that diameters thereof become smaller from one openings that communicate with the annular chamber toward another openings that communicate with the plural resin fill portions, and side walls of the first convex portions include tapered surfaces that are inclined at a second angle, which is smaller than the first angle, with respect to the extending direction of the resin fill paths such that surface areas of the first convex portions become smaller toward distal ends of the side walls of the first convex portions, and side walls of the second convex portions include tapered surfaces that are inclined at a third angle, which is smaller than the second angle, with respect to the extending direction of the resin fill paths such that surface areas of the second convex portions become smaller toward distal ends of the side walls of the second convex portions.

In a motor core manufacturing device such as that described above, the cull can be separated from the mold merely by moving the mold, and release at the time of releasing the cull from the plunger thereafter also is good.

In a motor core manufacturing device relating to a seventh aspect of the present disclosure, in the above-described motor core manufacturing device relating to the first or second aspect of the present disclosure, the convex portions include third convex portions that are formed at positions of a surface, which faces the first mold, of the annular plunger except at regions that face the resin fill paths, and the third convex portions extend in a direction intersecting the surface, which faces the first mold, of the annular plunger.

In a motor core manufacturing device such as that described above, owing to the third convex portions, the amount of resin that hardens within the chamber can be reduced even more.

In a motor core manufacturing device relating to an eighth aspect of the present disclosure, in the above-described motor core manufacturing device relating to the seventh aspect of the present disclosure, side walls of the resin fill paths include tapered surfaces that are inclined at a first angle with respect to an extending direction of the resin fill paths such that diameters thereof become smaller from one openings that communicate with the annular chamber toward another openings that communicate with the plural resin fill portions, and side walls of the third convex portions include tapered surfaces that are inclined at a fourth angle, which is smaller than the first angle, with respect to the extending direction of the resin fill paths such that surface areas of the third convex portions become smaller toward distal ends of the side walls of the third convex portions.

In a motor core manufacturing device such as that described above, release at the time of releasing the cull from the plunger is good.

A motor core manufacturing method relating to a ninth aspect of the present disclosure includes: a step of placing an annular resin material of a predetermined wall thickness within an annular chamber, and one or plural convex portions, which are formed so as to project toward an inner side of the annular chamber, are formed at an inner surface within the annular chamber except at portions that communicate with resin fill paths; a step of holding a motor core, which includes plural resin fill portions disposed in an annular form at a predetermined interval, within a mold in which are formed the resin fill paths that communicate with the annular chamber, such that end portions of the resin fill paths communicate with the plural resin fill portions; a step of heating and softening the annular resin material that is within the annular chamber; a step of operating an annular plunger in a direction of approaching the mold, and filling, into the plural resin fill portions, softened resin that is formed from the annular resin material that was softened within the annular chamber; and a step of hardening the softened resin that has been filled into the plural resin fill portions.

In a motor core manufacturing method such as that described above, due to the convex portion being formed within the chamber, the amount of resin that hardens outside of the resin fill portions can be reduced, and the amount of resin that is used can be suppressed. Advantageous Effects of Invention.

In accordance with the motor core manufacturing device and motor core manufacturing method of the present disclosure, the amount of resin that is used can be suppressed.

### BRIEF DESCRIPTION OF DRAWINGS

Fig. 1 is a schematic explanatory drawing illustrating an example of a motor core manufacturing device relating to a first embodiment of the present disclosure.
Fig. 2A is a schematic perspective view illustrating an example of a rotor core used in the motor core manufacturing device illustrated in Fig. 1.
Fig. 2B is a schematic perspective view illustrating an example of an annular resin material that is used in the motor core manufacturing device illustrated in Fig. 1.
Fig. 3A is a perspective view illustrating an example of a lower mold illustrated in Fig. 1.
Fig. 3B is a cross-sectional view cut along line A-A of Fig. 3A.
Fig. 4 is a flowchart illustrating an example of a motor core manufacturing method relating to the first embodiment of the present disclosure.
Fig. 5 is a drawing for explaining operation, which illustrates an example of an operating state of the motor core manufacturing device illustrated in Fig. 1.
Fig. 6 is a drawing for explaining operation, which illustrates an example of an operating state of the motor core manufacturing device illustrated in Fig. 1.
Fig. 7 is a drawing for explaining operation, which illustrates an example of an operating state of the motor core manufacturing device illustrated in Fig. 1.
Fig. 8 is a drawing for explaining operation, which illustrates an example of an operating state of the motor core manufacturing device illustrated in Fig. 1.
Fig. 9A is an enlarged sectional view cut along line B-B of Fig. 6.
Fig. 9B is an enlarged sectional view cut along line C-C of Fig. 7.
Fig. 10 is a perspective view illustrating an example of a cull illustrated in Fig. 8.
Fig. 11 is an enlarged view illustrating a first modified example of convex portions.
Fig. 12 is an enlarged view illustrating a second modified example of the convex portions.
Fig. 13 is an enlarged view illustrating a third modified example of the convex portions.
Fig. 14 is an enlarged view illustrating a fourth modified example of the convex portions.
Fig. 15 is a schematic explanatory drawing illustrating an example of a motor core manufacturing device relating to a second embodiment of the present disclosure.
Fig. 16A is a perspective view illustrating a modified example of the lower mold of the motor core manufacturing device illustrated in Fig. 1.
Fig. 16B is a bottom view illustrating the modified example of the lower mold of the motor core manufacturing device illustrated in Fig. 1.
Fig. 17 is a schematic explanatory drawing illustrating an example of a motor core manufacturing device relating to a third embodiment of the present disclosure.
Fig. 18 is a perspective view illustrating an example of the lower mold illustrated in Fig. 17.
Fig. 19 is a perspective view illustrating a modified example of the lower mold of the motor core manufacturing device illustrated in Fig. 17.

### DESCRIPTION OF EMBODIMENTS

This application is based on Japanese Patent Application No. 2023-048548 filed on March 24, 2023 in Japan, the contents of which form a portion of the contents of the present application.

The present disclosure will become more fully understood from the detailed description given hereinbelow. Further range of application of the present disclosure will become clearer from the detailed description given hereinbelow. However, the detailed description and the specific embodiment are illustrated of desired embodiments of the present disclosure and are described only for the purpose of explanation. Various changes and modifications will be apparent to those ordinary skilled in the art on the basis of the detailed description.

The applicant has no intention to give to public any disclosed embodiment. Among the disclosed changes and modifications, those which may not literally fall within the scope of the patent claims constitute, therefore, a part of the present invention in the sense of doctrine of equivalents.

Like reference numbers and designations in the various drawings indicate like elements.

Embodiments for implementing the present disclosure are described hereinafter with reference to the drawings. Note that, in the following description, the scope necessary for an explanation to achieve the object of the present disclosure is described schematically, and the scope needed for explaining the relevant portions of the present disclosure is mainly described, and portions for which explanation is omitted are in accordance with known art. Further, the same or similar reference numerals are applied to members that are the same as or correspond to one another in the drawings, and redundant description is omitted. Moreover, if plural members that are the same as or correspond to one another are included within a single drawing, there are cases in which reference numerals are only applied to some of such members in order to facilitate viewing of the drawing.

### <First Embodiment>

Examples of a motor core manufacturing device and motor core manufacturing method relating to the present disclosure are described hereinafter as a first embodiment. The motor core manufacturing device relating to the present embodiment employs an inner-rotor-type rotor core as the motor core. Further, this motor core manufacturing device exemplifies a device that is used at the time of fixing permanent magnets in slot portions formed in a rotor core. Here, the motor core in the present disclosure includes not only layered bodies formed by electromagnetic steel plates being layered, but also states of semi-manufactured products (of motors) in which some parts are mounted to such a layered body. Note that the motor core manufacturing device relating to the present embodiment may be used in place of fixing magnets of a motor core having completely closed slots, for fixing magnets of a motor core having open slots in which portions of the slots are open to the exterior and not completely closed slots, such as those of the embodiments described hereinafter. Or, the motor core manufacturing device relating to the present embodiment can also be utilized in order to resin-mold the portion of a stator core around which coils are wound, or the like, or in order to fill a resin into through-holes or the like, which are provided in the axial direction of a layered core in which there is no caulking, and integrally fix the layered core.

### (Motor Core Manufacturing Device)

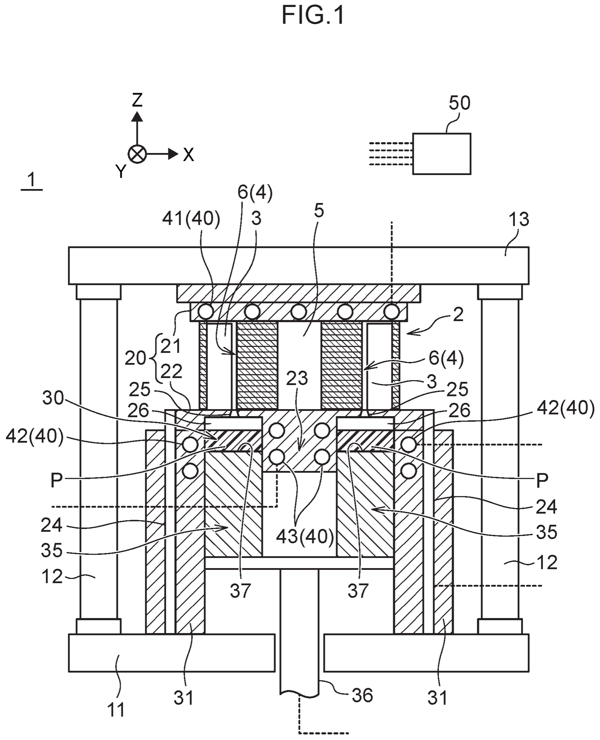

Fig. 1 is a schematic explanatory drawing illustrating an example of a motor core manufacturing device relating to a first embodiment of the present disclosure. As illustrated in Fig. 1, a motor core manufacturing device 1 relating to the present disclosure is a device that can fix permanent magnets 3 by injecting and hardening a resin in slot portions 4, into which the permanent magnets 3 have been inserted, of an inner-rotor-type rotor core 2. Note that, in the following description, in order to facilitate understanding, there are cases in which explanation is given by using the X direction shown in Fig. 1 as the left-right direction, the Y direction as the front-rear direction, and the Z direction as the height direction (or vertical direction).

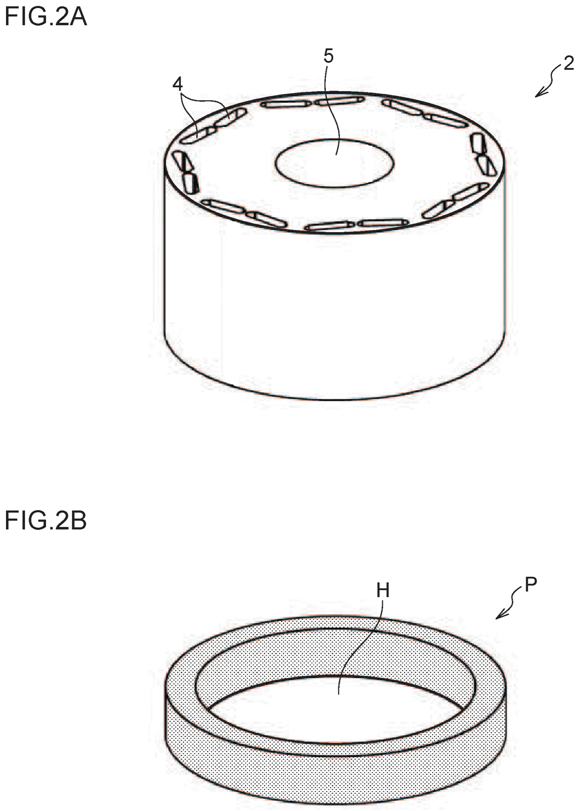

Fig. 2A and Fig. 2B are schematic perspective views illustrating examples of a rotor core and an annular resin material, which are used in the motor core manufacturing device illustrated in Fig. 1. As illustrated in Fig. 2A, the rotor core 2 can be structured by a magnetic body that is substantially shaped as a cylindrical tube and is structured by plural electromagnetic steel plates, which are thin and have wall thicknesses of 0.10 - 10.00 mm and more preferably around 0.20 - 0.65 mm, being layered. A through-hole 5, through which a shaft that structures a rotating shaft is inserted at the time of assembly as a motor, may be provided in the axially central portion of the rotor core 2. Further, the plural (16 in Fig. 2A) slot portions 4, which extend along the axial direction of the rotor core 2, may be disposed in an annular form so as to encircle this through-hole 5. The slot portions 4 are an example of the resin fill portions and can be structured by through-holes of shapes that are such that the permanent magnets 3 (see Fig. 1) can be inserted therein, e.g., rectangular parallelepiped shapes or arc shapes that pass-through in the wall thickness direction of the rotor core 2, but the specific shape thereof is not particularly limited. Similarly, the number of and the arrangement of the slot portions 4 also can be changed arbitrarily.

The slot portions 4 of the rotor core 2 are portions in whose interiors the permanent magnets 3 are inserted and fixed. The permanent magnets 3 can be structured by, for example, block bodies that are shaped as rectangle parallelopipeds or as arcs as seen in a plan view that are smaller than the slot portions 4. The permanent magnets 3 may or may not be magnetized at the point in time when they are inserted into the slot portions 4. Moreover, the permanent magnets 3 may or may not be divided into plural portions in the layering direction, or in a direction orthogonal to the layering direction. When the permanent magnets 3 are inserted in the slot portions 4, gaps are formed, at least partially, between the outer peripheral surfaces of the permanent magnets 3 and the inner peripheral surfaces of the slot portions 4. These gaps formed in the slot portions 4 can function as fill spaces 6 into which the resin is filled.

Resin material P, which is annular and is used in the motor core manufacturing device 1 relating to the present embodiment, can be structured mainly of a thermosetting resin material. In detail, a material that mainly contains a thermosetting resin that is an epoxy resin, a phenol resin, an unsaturated polyester resin, or a cyanate resin can be used as the annular resin material P. Further, in addition to the thermosetting resin material, hardening agents or fillers or the like may be added to the annular resin material P.

As illustrated in Fig. 2B, the annular resin material P can be structured of a resin molded body that is molded in an annular shape, and preferably an annular shape, of a predetermined wall thickness. In other words, it can be said that the annular resin material P that relates to the present embodiment is a resin molded body that has been molded in the shape of a donut having through-hole H at the central portion thereof. Detailed dimensions and the like of this annular resin material P may be adjusted in accordance with the shapes of a chamber 30 and resin fill paths 25 that are described later, the volume of the fill spaces 6, and the like.

As illustrated in Fig. 1, the motor core manufacturing device 1 relating to the present embodiment includes at least a mold 20 that can hold the rotor core 2, the annular chamber 30 that can accommodate the annular resin material P, and an annular plunger 35 that can move within the chamber 30. Further, the above-described respective structural elements can be accommodated within a manufacturing device main body 10, or can be mounted to appropriate places of the manufacturing device main body 10.

The manufacturing device main body 10 may include a base 11, plural (e.g., four) supporting columns 12 that stand at the surface of the base 11, and a ceiling plate 13 supported by the distal end portions of the supporting columns 12. Of the mold 20 that is described later, an upper mold 21 that is an example of a second mold may be fixed to the lower side surface of the ceiling plate 13, or the ceiling plate 13 may be able to be raised and lowered in the vertical direction together with the supporting columns 12 and the upper mold 21 by using an unillustrated actuator. The raising/lowering operation of the ceiling plate 13 can be carried out mainly at times when the rotor core 2 is held in the mold 20, or when the rotor core 2 is removed from the mold 20 and conveyed out.

The mold 20 is a member for holding the rotor core 2. Specifically, the mold 20 can include a lower mold 22 serving as an example of the first mold and positioned at one end portion in the axial direction of the rotor core 2, i.e., the lower end side, and the upper mold 21 serving as an example of the second mold and positioned at the another end portion in the axial direction of the rotor core 2, e.g., the upper end side.

The upper mold 21 can be structured by a plate-shaped member having a predetermined wall thickness, and may be a part whose upper surface side is mounted to the ceiling plate 13 and whose lower surface side can abut the upper surface of the rotor core 2.

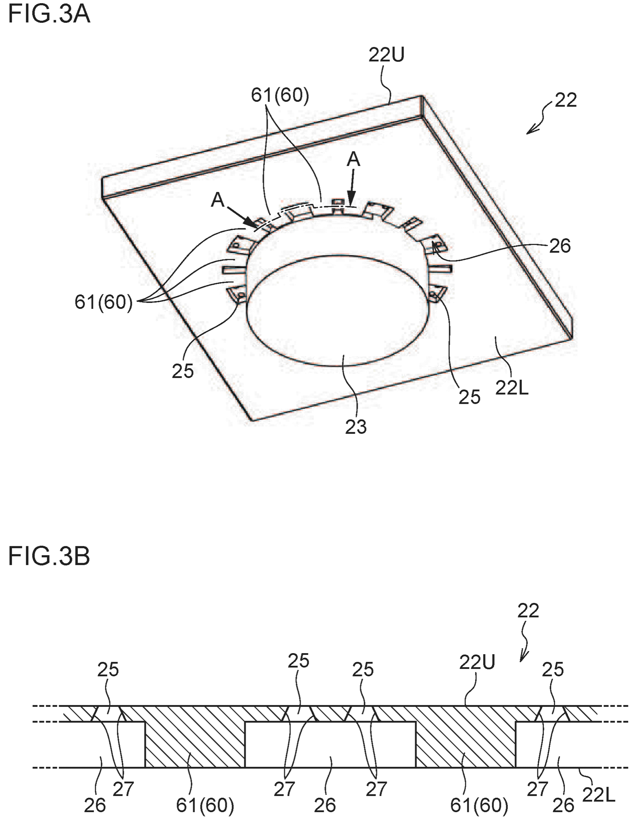

Fig. 3 illustrates an example of the lower mold illustrated in Fig. 1, and Fig. 3A is a perspective view, and Fig. 3B is a cross-sectional view cut along line A-A of Fig. 3A. As illustrated in Fig. 3A, the lower mold 22 can be structured by a plate-shaped member having a predetermined wall thickness, and may be a part at which at least a portion of a lower surface 22L side thereof functions as a portion of the annular chamber 30 that is described later, and whose upper surface 22U side can abut the lower surface of the rotor core 2. A projecting portion 23, which is columnar and demarcates the inner side wall surface of the chamber 30 that is described later, may be provided at the central portion of the lower surface 22L side of the lower mold 22. Further, as illustrated in Fig. 1, the lower mold 22 may further include a lifter 24, which can raise and lower the lower mold 22, in order to carry out placement of the annular resin material P into the chamber 30 and cleaning of the resin fill paths 25 and the like.

Further, the plural resin fill paths 25, which are for connecting the chamber 30 and the plural fill spaces 6 of the rotor core 2 that has been placed on the upper surface 22U of the lower mold 22, may be disposed at regions in the vicinity of the projecting portion 23 at the lower surface 22L of the lower mold 22. As illustrated in Fig. 3B, the resin fill paths 25 can be structured by plural passages whose one ends open at the upper surface 22U of the lower mold 22 and whose another ends open at the lower surface 22L, and in further detail, at the bottom surface of a resin flow-in groove 26 that is annular and is formed further toward the outer side than the side surface of the projecting portion 23 of the lower surface 22L.

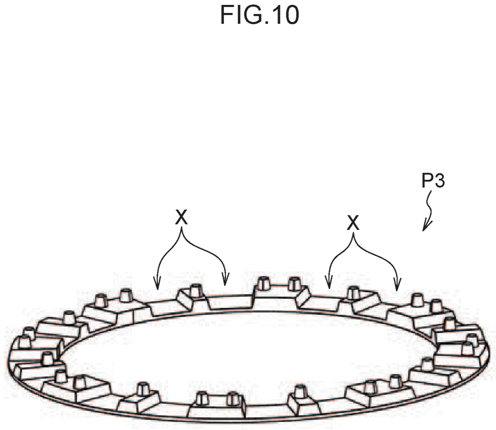

The resin flow-in groove 26 can function as the upper surface of the chamber 30 that is described later. Further, the resin flow-in groove 26 that can function as the upper surface of the chamber 30 is preferably formed at a position that overlaps, in plan view, the slot portions 4 of the rotor core 2 that is held in the mold 20. In this case, the resin fill paths 25 can communicate the upper surface of the chamber 30 and the slot portions 4 by short distances, and the amount of the resin that hardens within the resin fill paths 25 and the chamber 30, i.e., the amount of cull P3 (see Fig. 10), can be reduced as compared with conventional structures. Note that first convex portions 61 serving as examples of convex portions 60 that are described later are formed at the resin flow-in groove 26, and the structure of the first convex portions 61 is described later.

The resin fill paths 25 that are structured by plural passages extend in the vertical direction from the resin flow-in groove 26, which structures a portion of the upper surface of the chamber 30, toward the fill spaces 6 that are within the slot portions 4. Further, side walls 27 of the resin fill paths 25 may be tapered surfaces that are inclined such that the diameters thereof of the resin fill paths 25 become smaller toward the upper side.

The upper mold 21 may be movable in the vertical direction together with the ceiling plate 13 as described above. Further, the rotor core 2 can be held so as to be nipped between the upper mold 21 and the lower mold 22 due to, at the time when the rotor core 2 has been placed on the lower mold 22, the upper mold 21 being lowered and pushing the upper surface of the rotor core 2 with a predetermined pushing force. The shapes and the materials and the like of the surfaces of the upper mold 21 and the lower mold 22 that abut the rotor core 2 can be adjusted such that, at the time when resin is filled into the fill spaces 6, the filled resin does not leak-out to the exterior of the rotor core 2. Specifically, the contacting surfaces of the upper mold 21 and the lower mold 22 can be adjusted so as to be in substantially sealing states at the time when the rotor core 2 is nipped by the upper mold 21 and the lower mold 22.

The present embodiment employs a structure that moves the upper mold 21 vertically together with the ceiling plate 13 as described above. However, another structure can be employed provided that it is a structure that can relatively change the vertical direction positions of the upper mold 21 and the lower mold 22. Specifically, for example, a structure may be employed that, instead of moving the upper mold 21 in the vertical direction, moves the lower mold 22 in the vertical direction, or moves both the upper mold 21 and the lower mold 22 in the vertical direction.

Further, the present embodiment exemplifies portions, which are shaped as rectangular parallelepipeds that open in the vertical direction and substantially do not have any gaps in the front-rear and left-right directions, as the slot portions 4 of the rotor core 2. **In** relation thereto, parts that have substantially planar abutting surfaces are employed for the upper mold 21 and the lower mold 22. However, the shapes of the abutting surfaces of the upper mold 21 and the lower mold 22 with the rotor core 2 can be changed appropriately in accordance with the shape of the rotor core 2 that is held. For example, in a case in which the motor core manufacturing device 1 relating to the present embodiment is used in resin-molding an inner-rotor-type stator core, it is good to employ parts, which include projections that are inserted into the space formed at the center of the stator core, as the upper mold 21 and the lower mold 22.

The chamber 30 forms the annular space into which the annular resin material P that is to be filled into the fill spaces 6 can be placed. In other words, the chamber 30 is structured from a tubular space that extends in the vertical direction and is formed at the interior of a supporting stand 31 that is annular and is provided on the base 11. Further, the chamber 30 communicates with the resin fill paths 25 that are formed in the lower mold 22. Note that the present embodiment exemplifies a structure, which is formed by a space that is annular as seen in a plan view, as the shape of the chamber 30, but the shape of the chamber 30 can be changed appropriately in accordance with the shape and the like of the annular resin material P that is to be placed therein.

The chamber 30 relating to the present embodiment may be a space that is demarcated by the supporting stand 31, the lower mold 22 and the annular plunger 35. In further detail, the outer peripheral surface of the chamber 30 can be demarcated by the supporting stand 31, the inner peripheral surface can be demarcated by the projecting portion 23 of the lower mold 22, the bottom surface can be demarcated by a pushing surface 37 of the annular plunger 35, and the upper surface can be demarcated by the resin flow-in groove 26 that is formed in the lower surface 22L of the lower mold 22.

The one or plural convex portions 60 that project out toward the inner side of the chamber 30 are formed at any portion of the inner surface within the above-described chamber 30, except at the portions that communicate with the resin fill paths 25. The convex portions 60 may be portions such that, regardless of the position of the annular plunger 35, predetermined gaps are formed between the distal ends of the convex portions 60 and the surface, which faces the surface at which the convex portions 60 are formed, of the chamber 30. The present embodiment exemplifies the first convex portions 61, which structure the surface facing the annular plunger 35 and are formed at the bottom surface of the resin flow-in groove 26 of the lower mold 22, as the above-described convex portions 60.

As illustrated in Fig. 3, the first convex portions 61 may be formed at, of the bottom surface of the resin flow-in groove 26 that is formed in the lower surface 22L of the lower mold 22 and functions as a surface that demarcates a portion of a chamber 33, positions other than the regions that communicate with the resin fill paths 25. Further, the first convex portions 61 extend in a direction intersecting the lower surface 22L of the lower mold 22, e.g., downward, and the heights of the distal ends of the first convex portions 61 may be adjusted so as to be positioned substantially in the same plane as the lower surface 22L.

The annular plunger 35 may be a member for conveying the resin, which is within the chamber 30 formed from an annular space, toward the resin fill paths 25. Accordingly, it suffices for the portion, which enters into the chamber 30 and includes at least the pushing surface 37 that is positioned at the upper portion thereof, of the annular plunger 35 to be annular. Further, the pushing surface 37 can be disposed so as to seal off the chamber 30. Due thereto, the pushing surface 37 functions also as the lower surface of the chamber 30. Further, a raising/lowering arm 36 connected to an unillustrated actuator may be mounted to the surface, which is at the side opposite the pushing surface 37, of the annular plunger 35. The pushing surface 37 rises and falls within the chamber 30 due to operation of the actuator being transmitted to the annular plunger 35 via the raising/lowering arm 36. If sealing members (preferably metal seals) are provided at the inner and outer peripheries of the distal end of the annular plunger 35, a structure that provides an even better countermeasure to leaking of resin can be formed.

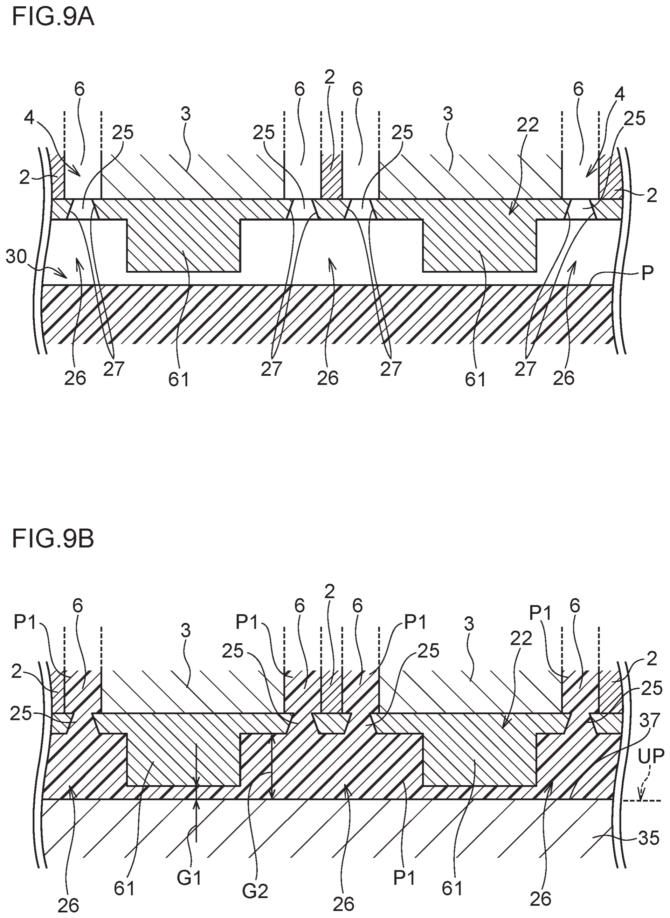

Here, the fact that, even in a case in which the pushing surface 37 of the annular plunger 35 has been moved to upper limit position UP (refer to Fig. 9B and the like) that serves as the position at which the pushing surface 37 is made to be nearest to the mold 20 within the movable region set for the annular plunger 35, the pushing surface 37 and the distal ends of the first convex portions 61 do not abut one another and a gap is ensured between the both is a particularly noteworthy item. This is in order to avoid upwardly-directed pressure (also called holding pressure) no longer being applied to the resin that has been injected in the fill spaces 6 due to the pushing surface 37 abutting the first convex portions 61 at the time when the annular plunger 35 has been raised up to the upper limit position UP. Note that the present embodiment exemplifies a case in which the annular plunger 35 is moved to the upper limit position UP and filling of the resin into the slot portions 4 that serve as the resin fill portions is completed. However, the timing of the completion of the filling of the resin may be determined on the basis of the pressure arising at the annular plunger 35. In this case, the height position of the pushing surface 37 of the annular plunger 35 at the time when filling of resin into the slot portions 4 is completed can be varied.

By the way, a gap of around 3 - 5 mm must be ensured between the annular plunger 35 and the upper surface of the chamber 30 in order to apply the holding pressure to the resin. The present embodiment employs a structure in which the plural first convex portions 61 are disposed at a predetermined interval at the bottom surface of the annular resin flow-in groove 26. Therefore, the necessary holding pressure can be ensured provided that the aforementioned gap of around 3 - 5 mm is ensured at the regions where the first convex portions 61 are not formed, e.g., the regions where the resin fill paths 25 are formed. Accordingly, gap G1 (see Fig. 9) between the pushing surface 37 that is at the upper limit position UP and the distal ends of the first convex portions 61 can be made to be sufficiently smaller than gap G2 (see Fig. 9) between the pushing surface 37 that similarly is at the upper limit position UP and the bottom surface of the resin flow-in groove 26 (e.g., the gap G1 can be made to be half or less of the gap G2). Due thereto, the amount of resin that hardens within the resin flow-in groove 26 can be reduced as compared with a case in which the first convex portions 61 are not provided. Note that, although the present embodiment describes the gap, which is for applying holding pressure to the resin, as being 3 - 5 mm as described above, the gap is not limited to these values. The value of the gap varies in accordance with the shapes of the core and the magnets, the type of the resin that is filled, and the like, and therefore, it is good to select an appropriate, optimal distance therefor.

Note that the rotor core 2, in which resin is to be filled into the slot portions 4, can often be changed to a rotor core of a different shape. Therefore, plural lower molds 22 that have the resin fill paths 25 and the resin flow-in groove 26 of different sizes and shapes can be readied in advance, and can be appropriately replaced and used in accordance with the rotor core 2 that is to be held within the mold 20.

Further, the motor core manufacturing device 1 relating to the present embodiment can further include, in addition to the above-described structures, heaters 40 that can heat the resin that is within the chamber 30 or within the mold 20. The heaters 40 can be structured by known heaters of which infrared heaters and sheathed heaters are representative examples, and may be provided at appropriate places within the manufacturing device main body 10. The heaters 40 relating to the present embodiment can include at least mold heaters 41 serving as first heaters and disposed within the mold 20, and chamber outer periphery heaters 42 serving as second heaters and disposed at the periphery of the outer side of the annular chamber 30.

It is good for the mold heaters 41 to be disposed at at least one of within the upper mold 21 and within the lower mold 22. Further, it is good for the chamber outer periphery heaters 42 to be disposed so as to surround the outer side wall surface of the annular chamber 30, e.g., the periphery of the chamber 30 within the supporting stand 31.

After the annular resin material P is placed within the chamber 30, when the chamber outer periphery heaters 42 are operated, the annular resin material P within the chamber 30 can be heated. Here, because the through-hole H is formed in the annular resin material P, the entirety of the resin material is disposed at a relatively close distance from the chamber outer periphery heaters 42. Due thereto, at the time when the annular resin material P is heated and softened within the chamber 30, local temperature differences that can arise due to differences in distances from the heat source (e.g., the chamber outer periphery heaters 42) can be kept small.

Further, in addition to the above-described mold heaters 41 and chamber outer periphery heaters 42, the heaters 40 can also include chamber inner periphery heaters 43 serving as third heaters and disposed at the periphery of the inner side of the annular chamber 30. Heaters that are provided within the projecting portion 23 of the lower mold 22 are exemplified as the chamber inner periphery heaters 43 relating to the present embodiment. It is good for the chamber inner periphery heaters 43 that are provided in the projecting portion 23 to be disposed at the central portion of the annular chamber 30, along the inner side wall surface of the chamber 30. By providing these chamber inner periphery heaters 43, heating of the inner side portion of the annular resin material P, which is at a position that is relatively far from the chamber outer periphery heaters 42, can be assisted. Accordingly, uniform heating of the resin material can be carried out more reliably. Note that the heaters 40 relating to the present embodiment are not limited to the above-described various types of heaters. For example, it is also possible to provide a separate heater at a position adjacent to the pushing surface 37 of the annular plunger 35.

The motor core manufacturing device 1 relating to the present embodiment may include a control device 50 for controlling the above-described, respective structural elements. The control device 50 may be a device that can realize arbitrary manufacturing steps by being electrically connected to the above-described, respective structural elements and controlling the operations thereof. As illustrated by the dashed line in Fig. 1 for example, the control device 50 may be connected to the respective structural elements so as to be able to communicate therewith by wired or wireless communication. This control device 50 can be realized by using a sequencer (Programmable Logic Controller, PLC) or a known computer. Further, the control device 50 can be structured from only one of the aforementioned computers or the like, or by combining a plurality thereof.

By operating the above-described, respective structural elements, the control device 50 can realize a motor core manufacturing method relating to the present embodiment that is described later. **In** relation thereto, the motor core manufacturing method relating to the present embodiment can be presented in the form of a program that is software or the like and includes commands for causing a computer that structures the control device 50 to execute predetermined operations, or the form of a computer-readable, non-transitory recording medium on which this program is stored, or the form of an application program provided over a network or the like. Details of the motor core manufacturing method relating to the present embodiment are described later.

In the motor core manufacturing device 1 having the above-described structure, the plural fill spaces 6 of the rotor core 2 into which resin is filled being disposed in an annular form, and the chamber 30 and the resin material that is placed in the chamber 30 both being annular, are particularly noteworthy items. When the arrangement of the fill spaces 6 and the shapes of the chamber 30 and the resin approximately coincide in this way, the lengths of the resin fill paths 25 that connect the chamber 30 and the fill spaces 6 can be shortened as compared with, for example, the above-described conventional devices in which a pot is positioned in the center of a mold. Accordingly, in accordance with the motor core manufacturing device 1 relating to the present embodiment, as compared with conventional devices, the time needed for the resin to pass through the resin fill paths 25 can be shortened, and the resin hardening reaction proceeding inadvertently within the resin fill paths 25 can be suppressed.

In relation to the above, it is good for the outer diameter and the inner diameter of the chamber 30 to be set in consideration of the arrangement of the fill spaces 6. Preferably, when the chamber 30 is formed at a position that overlaps, in plan view, the slot portions 4 of the rotor core 2 that is held in the mold 20, the resin fill paths 25 can be shortened, and the amount of resin that hardens outside of the slot portions 4 can be suppressed.

The motor core manufacturing method relating to the present embodiment is described next. In describing the motor core manufacturing method hereinafter, a case in which the rotor core 2 is manufactured by using the above-described motor core manufacturing device 1 is described as an example. However, the motor core manufacturing method relating to the present embodiment can also be realized by using a device other than the motor core manufacturing device 1. Note that at least some of the effects that are described with respect to the motor core manufacturing method that is described hereinafter also serve as description of effects achieved by the above-described motor core manufacturing device 1.

### (Motor Core Manufacturing Method)

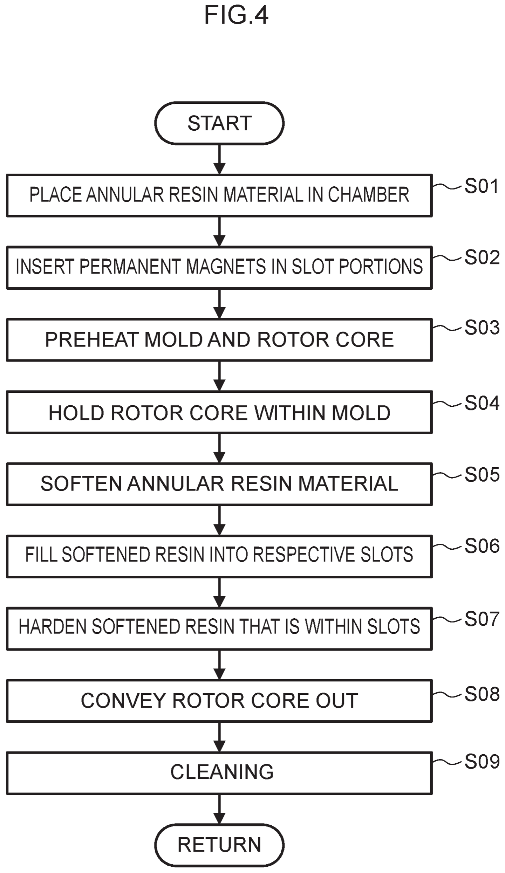

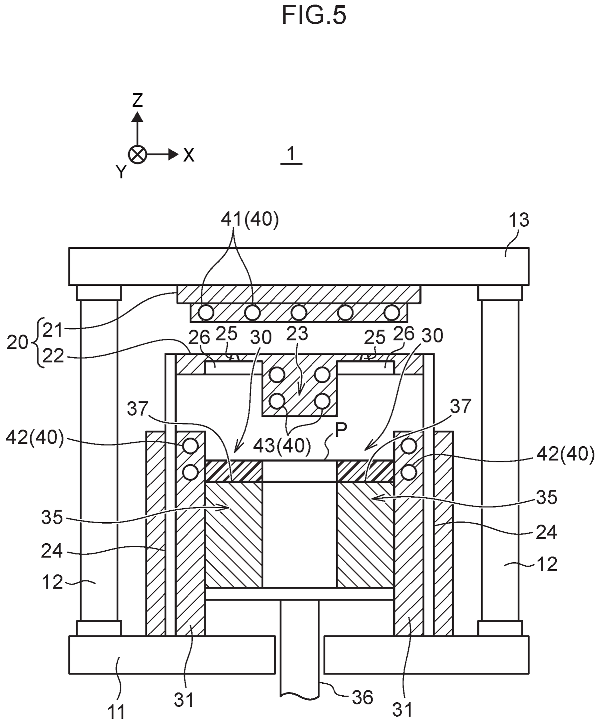

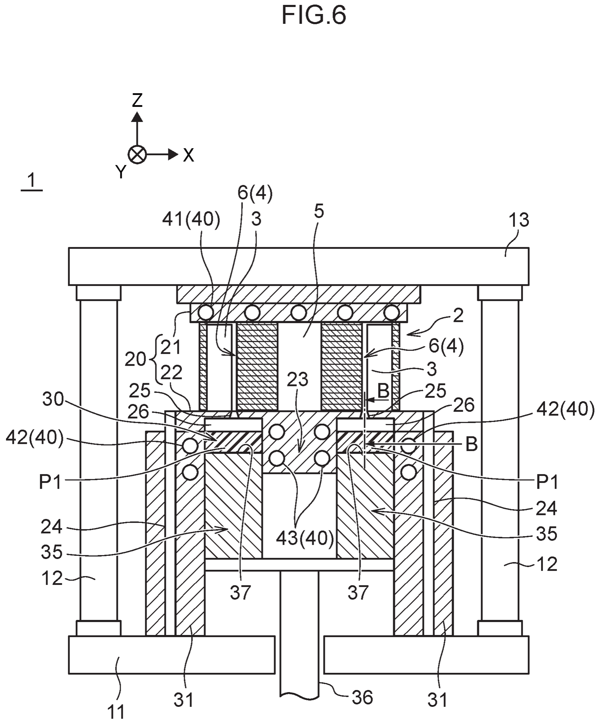

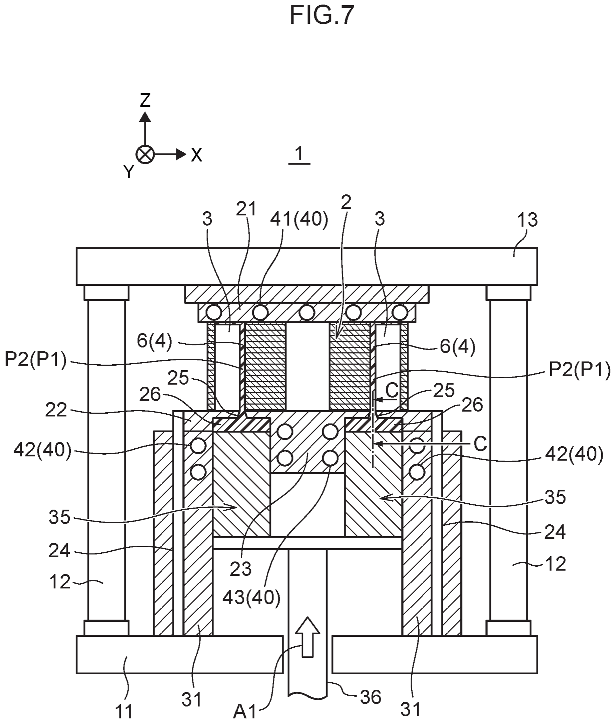

Fig. 4 is a flowchart illustrating an example of the manufacturing process executed at the motor core manufacturing device illustrated in Fig. 1. Further, Fig. 5 through Fig. 8 are drawings for explaining operation, which illustrate examples of operating states of the motor core manufacturing device illustrated in Fig. 1. Moreover, Fig. 9A is an enlarged view of portion B of Fig. 6, and Fig. 9B is an enlarged view of portion C of Fig. 7. Hereinafter, description of the motor core manufacturing method relating to the present embodiment is carried out mainly with reference to Fig. 4 through Fig. 9. Note that, in Fig. 5 through Fig. 8, members having little relevance to the series of operations and the reference numerals thereof are partially omitted or are simplified in order to facilitate viewing of the drawings.

The motor core manufacturing method relating to the present embodiment includes at least: a step (corresponding to step S01 described later) of placing an annular resin material of a predetermined wall thickness within an annular chamber, and one or plural convex portions, which are formed so as to project toward an inner side of the annular chamber, are formed at the inner surface within the annular chamber except at portions that communicate with resin fill paths; a step (corresponding to step S04 described later) of holding a motor core, which includes plural resin fill portions disposed in an annular form at a predetermined interval, within a mold in which are formed the resin fill paths that communicate with the annular chamber, such that end portions of the resin fill paths communicate with the plural resin fill portions; a step (corresponding to step S05 described later) of heating and softening an annular resin material that is within the annular chamber; a step (corresponding to step S06 described later) of operating an annular plunger in a direction of approaching the mold, and filling, into the plural resin fill portions, softened resin that is formed from the annular resin material that was softened within the annular chamber; and a step (corresponding to step S07 described later) of hardening the softened resin that has been filled into the plural resin fill portions. Details are described hereinafter with reference to the drawings.

As illustrated in Fig. 4, the motor core manufacturing method relating to the present embodiment first operates the lifter 24 and raises the lower mold 22, and places the annular resin material P within the chamber 30 that has been exposed due thereto (step S01). As illustrated in Fig. 5, the annular resin material P that has been placed within the chamber 30 is placed on the pushing surface 37 of the annular plunger 35 that functions as the lower surface of the chamber 30. It is good to adjust the size (the wall thickness in particular) of the annular resin material P that is placed in the chamber 30, in consideration of the sizes of the fill spaces 6 and the resin fill paths 25 and the like of the rotor core 2 that is held after.

Note that it is preferable to preheat the chamber 30 before placing the annular resin material P within the chamber 30. The preheating of the chamber 30 can be realized by, for example, operating the chamber outer periphery heaters 42 and/or the chamber inner periphery heaters 43.

Further, before or after the annular resin material P is placed in the chamber 30, or in parallel with placing the annular resin material P, the permanent magnets 3 and the rotor core 2 to which the permanent magnets 3 are to be mounted are readied, and the permanent magnets 3 are inserted into the slot portions 4 of the rotor core 2 (step S02). Then, preheating of the mold 20 and the rotor core 2 is carried out (step S03). The preheating of the mold 20 can be carried out, for example, by using the mold heaters 41. The preheating of the rotor core 2 may be carried out separately from the preheating of the mold 20 by using an unillustrated, known heating means or the like. However, if the mold heaters 41 are operated in a state in which the rotor core 2 has been placed on the lower mold 22, the preheating of the mold 20 and the preheating of the rotor core 2 can be carried out simultaneously, and the series of processes can be simplified. Note that, at the time of preheating the mold 20 and the rotor core 2 simultaneously, it is good to carry out step S04, which is described later, before step S03. The preheating temperature of the mold 20 and the rotor core 2 can be made to be around 100 - 180°C for example. Further, the preheating can also be carried out on only either one of the mold 20 and the rotor core 2.

The order of step S02 and step S03 can be changed. In this case, the permanent magnets 3 (that have been preheated separately or that have not been preheated) are inserted into the slot portions 4 of the rotor core 2 after the rotor core 2 and the mold 20 are preheated.

When preheating of the mold 20 and the rotor core 2 is completed, as illustrated in Fig. 6, the lifter 24 is operated and the lower mold 22 is lowered, and thereafter, the rotor core 2 is placed on the lower mold 22. Next, by moving the upper mold 21 downward, the rotor core 2 is held within the mold 20 (step S04). At this time, the upper mold 21 is adjusted so as to press the upper surface of the rotor core 2 with a predetermined pressure. Due thereto, the upper mold 21 and the upper surface of the rotor core 2, and the lower mold 22 and the lower surface of the rotor core 2, can be made to fit tightly to one another, respectively. Note that, in this step S04, it is good to position the rotor core 2, which is placed on the lower mold 22, such that the fill spaces 6 of the plural slot portions 4 are continuous with the resin fill paths 25 that open at the upper surface 22U of the lower mold 22.

At the motor core manufacturing device 1 that is in the state illustrated in Fig. 6, the upper surface of the chamber 30, which is sealed by the lower mold 22 being lowered, is demarcated by the resin flow-in groove 26. Further, at the time of the state illustrated in Fig. 6, the interior of the resin flow-in groove 26 is a space in which the resin does not exist as illustrated in Fig. 9A.

At an appropriate timing after above-described step S01, the annular resin material P is heated due to the chamber outer periphery heaters 42 and the chamber inner periphery heaters 43 being operated (step S05). The heating of the interior of the chamber 30 is in order to lower the viscosity of the annular resin material P and make the annular resin material P become a resin P1 that is softened (hereinafter called "softened resin"). It is preferable that the chamber outer periphery heaters 42 and the chamber inner periphery heaters 43 that are used in this heating be controlled such that local differences in temperature do not arise at the annular resin material P. Due to this heating, the annular resin material P melts, and the viscosity thereof decreases, and the annular resin material P can be changed into the softened resin P1 whose fluidity is high.

When the annular resin material P changes into the softened resin P1, next, as illustrated in Fig. 7, filling of the softened resin P1 into the fill spaces 6 within the respective slot portions 4 is carried out due to the annular plunger 35 being raised in the arrow A1 direction and pushing the softened resin P1 upward (step S06). The softened resin P1, which has been pushed-up by the pushing surface 37 of the annular plunger 35, flows into the resin flow-in groove 26 that demarcates the upper surface of the chamber 30, and thereafter, passes through the resin fill paths 25 and flows into the respective fill spaces 6. Note that, in order to smoothly carry out the filling of the softened resin P1 into the fill spaces 6 in step S06, for example, air holes (not illustrated) for releasing air within the fill spaces 6 may be provided at appropriate places of the upper mold 21.

When the pushing surface 37 of the annular plunger 35, which has pushed the softened resin P1 up in above-described step S06, reaches the upper limit position UP that is set slightly lower than the height position of the distal ends of the first convex portions 61, the raising is stopped in a state in which a predetermined holding pressure is maintained. As illustrated in Fig. 9B, the gap G1 between the pushing surface 37 that has reached the upper limit position UP and the distal ends of the first convex portions 61 is sufficiently smaller than the gap G2 between the pushing surface 37 and the bottom surface of the resin flow-in groove 26. Due thereto, the amount of the cull P3 that is described later is suppressed. On the other hand, due to the gap G2 between the pushing surface 37 and the bottom surface of the resin flow-in groove 26 being relatively large (e.g., 3 - 5 mm), at the time of hardening the softened resin P1 in step S07 that is described hereinafter, the holding pressure with respect to the resin is ensured sufficiently.

When filling of the softened resin P1 into the fill spaces 6 is completed, next, the softened resin P1 is hardened (step S07) due to the mold heaters 41 being operated and the softened resin P1 within the fill spaces 6 being heated at a higher temperature than the heating in step S05. At the time of hardening the softened resin P1, it is good to heat the temperature of the softened resin P1 by the mold heaters 41 for around several minutes in a temperature range in which the viscosity can rise greatly. Due to the softened resin P1 changing into hardened resin P2 by this heating, the permanent magnets 3 are fixed within the slot portions 4 of the rotor core 2 by resin molding. Note that the heating time in step S07 can be adjusted appropriately in accordance with the type and the like of the resin that is used for the annular resin material P.

In step S07, as described above, heating is carried out in the state in which the pushing surface 37 has been moved to the upper limit position UP. Therefore, the hardening reaction of the softened resin P1 that is within the fill spaces 6 and within the resin fill paths 25 proceeds in a state in which holding pressure that acts in the upward direction is applied thereto. Accordingly, irregularities in filling of the softened resin P1 can be eliminated, and a decrease in the filling density of the softened resin P1 into the fill spaces 6 can be suppressed.

When the above-described series of resin molding processes is completed, the upper mold 21 is raised, and the rotor core 2 that has been resin-molded is conveyed out to the exterior of the device by using an unillustrated conveying means such as a robot arm (step S08). The rotor core 2 that has been conveyed out can be transferred to another device for, for example, mounting of a shaft or the like. Then, when the conveying-out of the rotor core 2 is completed, cleaning of the manufacturing device 1 is carried out (step S09). As illustrated in Fig. 7, the cleaning of the manufacturing device 1 includes operating the lifter 24 and removing the resin that has hardened outside of the slot portions 4, i.e., the cull P3. In addition, cleaning of the surface of the mold 20 and the interior of the chamber 30 and the like by using members for cleaning such as brushes can be included.

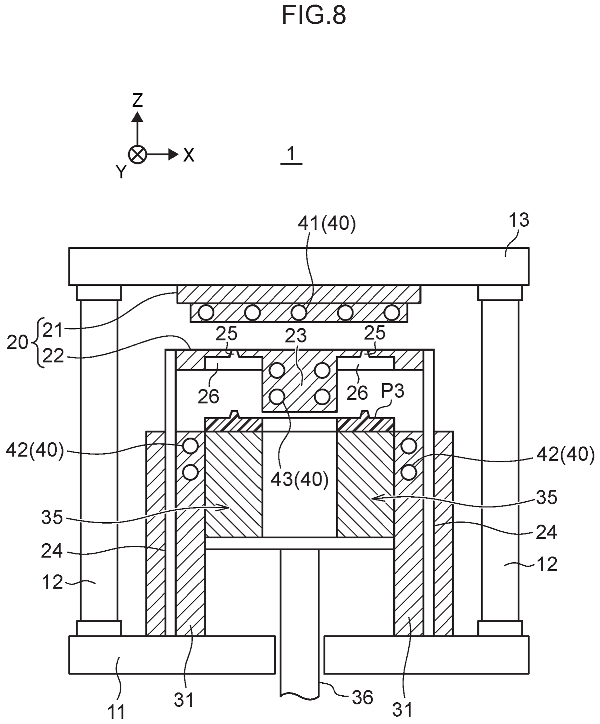

Fig. 10 is a perspective view illustrating an example of the cull illustrated in Fig. 8. As illustrated in Fig. 10, at the cull P3 that is generated as a result of the above-described series of steps, portions X where the first convex portions 61 were formed are thinner-walled than the portions where the first convex portions 61 were not formed. Accordingly, the amount of the cull P3 can be reduced as compared with a case in which resin molding is carried out by using a lower mold at which the first convex portions 61 are not formed.

As described above, in accordance with the motor core manufacturing device 1 and the motor core manufacturing method relating to the present embodiment, by forming the first convex portions 61 at the upper surface of the chamber 30, the amount of resin that hardens at the exterior of the slot portions 4 at the time of resin filling can be reduced. Accordingly, the permanent magnets 3 can be fixed within the slot portions 4 by a small amount of resin.

Further, in accordance with the motor core manufacturing device 1 and the motor core manufacturing method relating to the present embodiment, because both the chamber 30 and the annular resin material P that is placed in the chamber 30 are annular, at the time of heating the resin that is within the chamber 30, it is difficult for differences in temperature to arise, and heating can be carried out uniformly. Further, because the shape of the chamber 30 matches the arrangement of the fill spaces 6, the length of the resin fill paths 25 that connect the both can be made shorter, and the resin hardening reaction proceeding inadvertently within the resin fill paths 25 can be suppressed, and the filling of the resin into the slot portions can be carried out stably.

Note that the above-described present embodiment describes, as an example, a form in which the resin fill paths 25 are provided at the lower mold 22, and the softened resin **P1 is** filled into the fill spaces 6 from below, but the filling direction is not limited to this. For example, there may be a form in which the resin fill paths, the resin flow-in groove, the first convex portions and the like are provided in the upper mold 21 instead of the lower mold 22, and the softened resin is filled-in from above. Or, there may be a form in which resin fill paths, the resin flow-in groove, the first convex portions and the like are provided respectively in both the lower mold 22 and the upper mold 21, and the resin is filled in from both below and above.

### (Modified Examples)

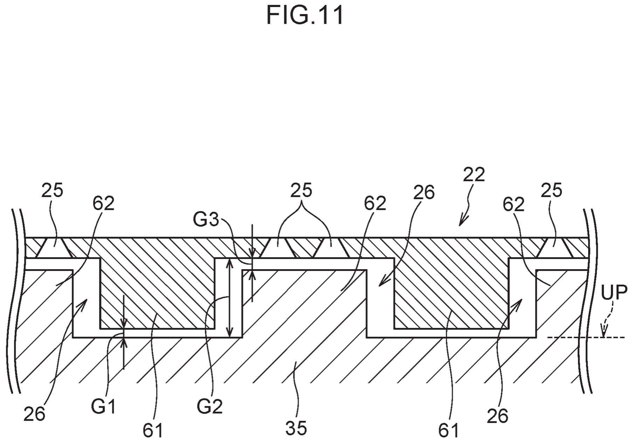

The above-described present embodiment exemplifies employing, as an example of the convex portions 60, the first convex portions 61 whose wall surfaces extend from the bottom surface of the resin flow-in groove 26, which serves as the surface that faces the annular plunger 30, substantially orthogonally to that bottom surface. However, the shape and the arrangement of the convex portions 60 are not limited to those described above. Thus, several modified examples of the convex portions 60 are described hereinafter. Note that, in the modified examples shown hereinafter, only explanation relating to the convex portions 60 is carried out, and structural elements that are similar to those of the motor core manufacturing device 1 are denoted by the same reference numerals, and description thereof is omitted. Further, Fig. 11 through Fig. 14 that are explained hereinafter are all enlarged sectional views, corresponding to Fig. 9B, of the state in which the pushing surface 37 of the annular plunger 35 is at the upper limit position UP. In addition, illustration of the resin and the rotor core is omitted in Fig. 11 through Fig. 14.

Fig. 11 is an enlarged view illustrating a first modified example of the convex portions. As illustrated in Fig. 11, the convex portions 60 relating to the first modified example may further include, in addition to the above-described first convex portions 61, second convex portions 62 that are formed at the surface, which faces the lower mold 22, of the annular plunger 35, i.e., at some positions other than the regions, which face the first convex portions 61, of the pushing surface 37. The second convex portions 62 may extend in a direction intersecting the pushing surface 37 of the annular plunger 35, e.g., upwardly. More specifically, plural portions, which stand at positions of the pushing surface 37 which positions face the resin fill paths 25, are exemplified as the second convex portions 62 shown in the present modified example.

The second convex portions 62 are disposed only at some positions that are other than the regions that face the first convex portions 61. In other words, it is good for the second convex portions 62 to be disposed such that at least portions of the chamber 30 in the peripheral direction are regions at which neither the first convex portions 61 nor the second convex portions 62 are formed. The example illustrated in Fig. 11 exemplifies, as the second convex portions 62, convex portions that are disposed at positions facing the resin fill paths 25 and whose peripheral direction lengths are adjusted such that the both side surfaces thereof in the peripheral direction are positioned so as to be apart by a predetermined distance from the side surfaces of the adjacent first convex portions 61. By ensuring regions, at which neither the first convex portions 61 nor the second convex portions 62 are formed, at at least portions in the peripheral direction of the chamber 30 in this way, the gap G2 that is relatively large can be ensured at the time when the pushing surface 37 of the annular plunger 35 is pushed up to the upper limit position UP.

In the same way as the above-described gap G1, gap G3 between the distal end of the second convex portion 62 and the bottom surface of the resin flow-in groove 26 can be made to be smaller than the gap G2 that is between the pushing surface 37 at the upper limit position UP and the bottom surface of the resin flow-in groove 26. Accordingly, the amount of the cull that hardens outside of the slot portions 4 can be reduced even more as compared with a case in which third convex portions 63 are not provided within the chamber 30. Further, by ensuring the above-described three gaps G1 through G3, holding pressure can be applied to the softened resin P1.

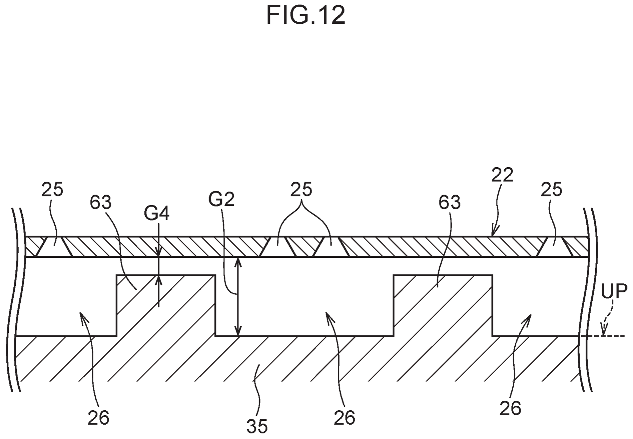

Fig. 12 is an enlarged view illustrating a second modified example of the convex portions. As illustrated in Fig. 12, the third convex portions 63 serving as the convex portions 60 relating to the second modified example may be formed at the surface, which faces the lower mold 22, of the annular plunger 35, i.e., at positions other than the regions, which face the resin fill paths 25, of the pushing surface 37. Further, the third convex portions 63 may extend in a direction intersecting the pushing surface 37 of the annular plunger 35, i.e., upwardly. Plural convex portions, which stand at an interval along the circumferential direction of the annular pushing surface 37, are exemplified as the third convex portions 63 shown in the present modified example.

The heights of the third convex portions 63 may be adjusted such that, when the pushing surface 37 is at the upper limit position UP, a predetermined gap G4 is formed between the distal ends of the third convex portions 63 and the bottom surface of the resin flow-in groove 26. In the same way as the above-described gaps G1 and G3, the gap G4 can be made to be smaller than the gap G2 that is between the pushing surface 37 at the upper limit position UP and the bottom surface of the resin flow-in groove 26. Accordingly, the amount of the resin that hardens within the resin flow-in groove 26 can be reduced as compared with a case in which the third convex portions 63 are not provided within the chamber 30.

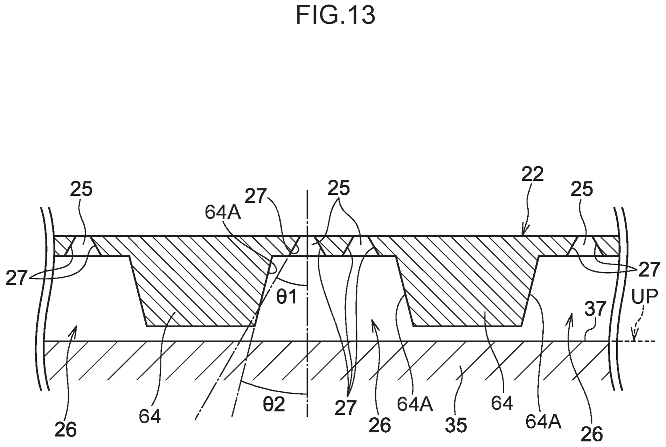

Fig. 13 is an enlarged view illustrating a third modified example of the convex portions. As illustrated in Fig. 13, fourth convex portions 64 that serve as the convex portions 60 relating to the third modified example are similar to the first convex portions 61 with regard to the point that they are formed at the bottom surface of the resin flow-in groove 26. On the other hand, the fourth convex portions 64 differ from the first convex portions 61 with regard to the point that both side walls 64A thereof that are positioned in the peripheral direction are structured by tapered surfaces that are inclined such that the surface area of the fourth convex portion 64, and in detail, the peripheral direction length thereof, becomes smaller toward the distal end of the fourth convex portion 64.

Here, it is good to set inclination angle (corresponding to the second angle) θ2 of the side wall 64A of the fourth convex portion 64 with respect to the extending direction of the resin fill path 25 to be smaller than inclination angle (corresponding to the first angle) θ1 of the side wall 27 of the resin fill path 25 with respect to the extending direction of the resin fill path 25. By making inclination angle θ2 be smaller than inclination angle θ1 in this way, releasing of the portions, which have hardened within the resin fill paths 25, of the cull P3 is good as compared with the portions that have hardened within the resin flow-in groove 26. Due thereto, at the time of releasing the cull P3 from the lower mold 22, it is possible to suppress some of the cull P3 remaining within the resin fill paths 25.

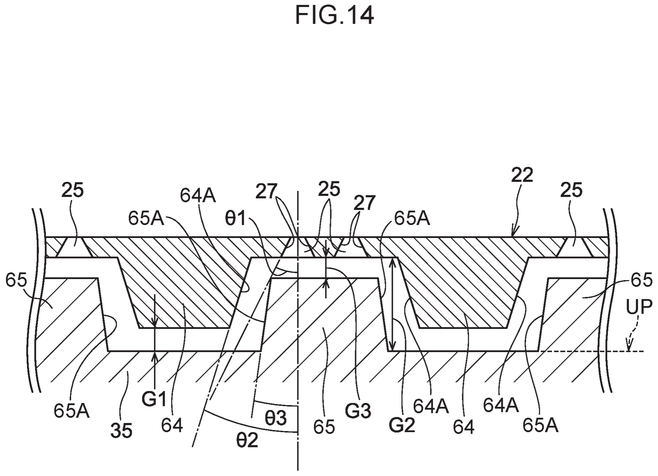

Fig. 14 is an enlarged view illustrating a fourth modified example of the convex portions. The convex portions 60 relating to the present modified example may include, in addition to the above-described fourth convex portions 64, fifth convex portions 65 that are formed at some positions, other than regions facing the first convex portions 61, of the pushing surface 37 of the annular plunger 35. The arrangement of the fifth convex portions 65 is similar to the above-described second convex portions 62. On the other hand, the fifth convex portions 65 differ from the second convex portions 62 with regard to the point that both side walls 65A thereof that are positioned in the peripheral direction are structured by tapered surfaces that are inclined such that the surface area of the fifth convex portion 65, and in detail, the peripheral direction length thereof, becomes smaller toward the distal end of the fifth convex portion 65.

It is good to set inclination angle (corresponding to the third angle) θ3 of the side wall 65A of the fifth convex portion 65 with respect to the extending direction of the resin fill path 25 to be smaller than the above-described inclination angle θ2. By making inclination angle θ3 be smaller than above-described inclination angles θ1 and θ2 in this way, releasing of the cull P3 with respect to the lower mold 22 can be made to be better than releasing with respect to the pushing surface 37 of the annular plunger 35. Accordingly, at the time when the lower mold 22 is moved upward, the cull P3 is not lifted-up together with the lower mold 22, and the cleaning work is easy.

Further, although detailed explanation is omitted, the side walls of the third convex portions 63 that serve as the convex portions 60 of the above-described second modified example can be made to be tapered surfaces that are inclined at a predetermined angle (e.g., inclination angle θ2), in the same way as the side walls 64A, 65A of the above-described fourth and fifth convex portions 64, 65. In this case, it will be clear to those skilled in the art that effects that are similar to the effects described in the fourth modified example are obtained by making the angle of inclination of the side walls of the third convex portions 63 with respect to the extending direction of the resin fill paths 25 smaller than the above-described inclination angle θ1.

### <Second Embodiment>

The motor core manufacturing device 1 relating to the above-described first embodiment exemplifies a structure in which the chamber 30 is formed at a position that, in plan view, overlaps the slot potions 4 of the rotor core 2 held in the mold 20, in consideration of the length of the resin fill paths 25. However, the present disclosure is not limited to this.

Thus, hereinafter, a device that can carry out resin molding on a rotor core 2A whose outer diameter is greater than that of the above-described rotor core 2 is exemplified as a motor core manufacturing device 1A relating to a second embodiment of the present disclosure. Note that the motor core manufacturing device 1A relating to the present embodiment can employ a structure that is similar to the motor core manufacturing device 1 relating to the first embodiment, except for the rotor core 2A and a mold 20A that holds the rotor core 2A.

Thus, hereinafter, description centers around, of a motor core manufacturing device 1B relating to the present embodiment, the structures that differ from the above-described motor core manufacturing device 1. Structural elements that are similar to the motor core manufacturing device 1 are denoted by the same reference numerals, and description thereof is omitted.

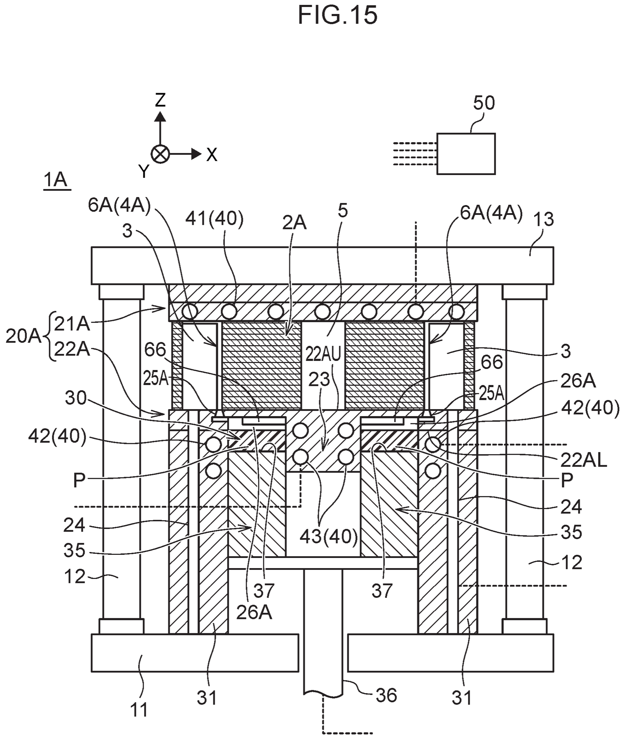

Fig. 15 is a schematic explanatory drawing illustrating an example of the motor core manufacturing device relating to the second embodiment of the present disclosure. As illustrated in Fig. 15, the motor core manufacturing device 1A relating to the present embodiment is a device that can carry out resin molding at the rotor core 2A whose outer diameter is large as compared with the above-described rotor core 2 and at which, in relation thereto, the positions of slot portions 4A are positioned at the outer peripheral side as compared with the slot portions 4. Accordingly, the outer diameter of the mold 20A of the motor core manufacturing device 1 relating to the present embodiment is large as compared with the above-described mold 20.

The mold 20A includes an upper mold 21A abutting the upper surface of the rotor core 2A, and a lower mold 22A positioned at the lower surface of the rotor core 2A.

Further, a resin flow-in groove 26A that functions as the upper surface of the chamber 30 is provided in a lower surface 22AL of the lower mold 22A. Moreover, resin fill paths 25A, which communicate the resin flow-in groove 26A and fill spaces 6A that are within the slot portions 4A of the rotor core 2A that has been placed on an upper surface 22AU of the lower mold 22, are provided in the lower mold 22A. Further, as illustrated in Fig. 13, the resin fill path 25A is formed by a passage that is substantially L-shaped in cross-section and at which a portion thereof extends in the radial direction.

In the motor core manufacturing device 1A relating to the present embodiment as well, the one or plural convex portions 60 can be formed at portions of the inner surface of the chamber 30. Specifically, sixth convex portions 66 that are formed so as to extend downward can be formed in the bottom surface of the resin flow-in groove 26A that structures the surface facing the annular plunger 35. At portions where the resin fill paths 25A are formed, as illustrated in Fig. 15, is good to provide the sixth convex portions 66 only at the inner side portion of the resin flow-in groove 26A so that the resin fill paths 25A are not blocked by the sixth convex portions 66. By providing the sixth convex portions 66, in the motor core manufacturing device 1A relating to the present embodiment as well, the amount of resin that hardens outside of the slot portions 4A at the time when resin is filled into the slot portions 4A can be reduced as compared with a case in which the convex portions 60 are not provided. Accordingly, the permanent magnets 3 can be fixed within the slot portions 4A by a small amount of resin.

Further, in the motor core manufacturing device 1A relating to the present embodiment as well, because both the chamber 30 and the annular resin material P that is placed in the chamber 30 are annular, at the time of heating the resin that is within the chamber 30, it is difficult for differences in temperature to arise, and heating can be carried out uniformly, as compared with a case using a tablet-shaped resin as in a conventional device. Further, although the radial direction dimensions are different, the outer shape of the chamber 30 matches the arrangement of the fill spaces 6, and therefore, the length of the resin fill paths 25A that connect the both can be made shorter as compared with conventional devices. Accordingly, at the time when the softened resin P1 is sent to the fill spaces 6A, the resin hardening reaction proceeding inadvertently within the resin fill paths 25A can be suppressed, and the filling of the resin into the slot portions 4A can be carried out stably.

The above-described respective embodiments exemplify, as the convex portions 60, portions that are formed so as to project from the bottom surface of the resin flow-in groove 26, 26A or from the pushing surface, but the present disclosure is not limited to this. Specifically, the convex portions 60 may be formed at a side surface of the chamber.

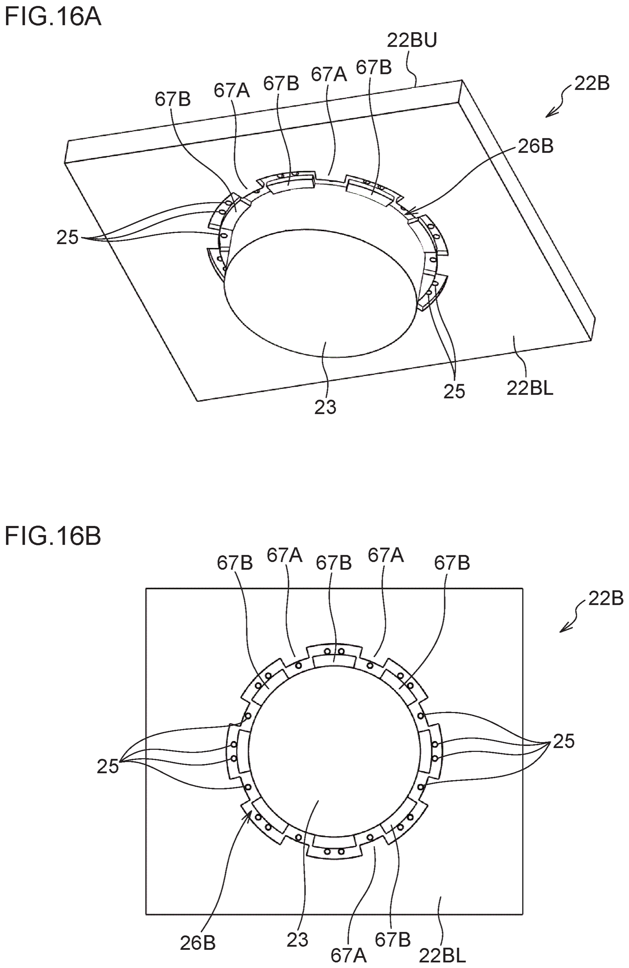

Fig. 16 is drawings illustrating a modified example of the lower mold of the motor core manufacturing device illustrated in Fig. 1, and Fig. 16A is a perspective view, and Fig. 16B is a bottom view. As illustrated in Fig. 16, the outer shape of a lower mold 22B relating to a modified example is approximately the same as the lower mold 22 of the first embodiment. Namely, the lower mold 22B may be structured by a plate-shaped member having a predetermined wall thickness, and the projecting portion 23, which is columnar and demarcates a portion of the inner surface of the chamber 30, may be provided at the central portion of a lower surface 22BL of the lower mold 22B, and a resin flow-in groove 26B, which communicates with the resin fill paths 25 that are connected to upper surface 22BU of the lower mold 22B, may be formed at the periphery of the projecting portion 23.

The resin flow-in groove 26B of the lower mold 22B also serves as an upper portion of the chamber 30. Further, as illustrated in Fig. 16, seventh convex portions 67A, 67B may be formed respectively in the outer peripheral wall surface and the inner peripheral wall surface, which extend in the vertical direction, of the resin flow-in groove 26B, at portions other than the regions where the resin fill paths 25 are formed. Note that the outer peripheral wall surface and the inner peripheral wall surface of the resin flow-in groove 26B demarcate portions of the inner surface of the chamber 30.

The seventh convex portions 67A that are formed at the outer peripheral wall surface of the resin flow-in groove 26B may be formed so as to extend from that outer peripheral wall surface toward the inner peripheral wall surface of the resin flow-in groove 26B. Further, the seventh convex portions 67B that are formed at the inner peripheral wall surface of the resin flow-in groove 26B may be formed so as to extend from that inner peripheral wall surface toward the outer peripheral wall surface of the resin flow-in groove 26B. Further, the upper wall surfaces of the seventh convex portions 67A, 67B may be connected to the bottom surface of the resin flow-in groove 26B, and the lower wall surfaces may be adjusted to positions such that predetermined gaps are formed at the time when the pushing surface 37 of the plunger 35 is positioned at the upper limit position UP. Note that, in the case of the present embodiment as well, as in the embodiment illustrated in Fig. 11, convex portions, which are formed in the surface of the annular plunger 35 facing the lower mold 22B, i.e., at some positions other than the regions of the pushing surface 37 that face the convex portions 67A and 67B, may be further included.

By providing the above-described seventh convex portions 67A, 67B as well, it can be anticipated that effects similar to the effects described in the above-described respective embodiments will be achieved. Namely, the amount of resin that hardens outside of the slot portions 4 at the time of resin filling can be reduced. Accordingly, the permanent magnets 3 can be fixed within the slot portions 4 by a small amount of resin.

### <Third Embodiment>

The motor core manufacturing devices 1, 1A relating to the above-described first and second embodiments exemplify structures in which the projecting portion 23 is provided at the lower mold 22, but the present disclosure is not limited to this. Thus, hereinafter, a device that includes a lower mold 22C that does not have the above-described projecting portion 23 is exemplified as a motor core manufacturing device 1C relating to a third embodiment of the present disclosure. Note that the motor core manufacturing device 1C relating to the present disclosure can employ a structure that is similar to the motor core manufacturing device 1 relating to the first embodiment, except for the structure of a mold 20C and structures relating to a block body 70 that is described later. Thus, hereinafter, description centers around, of the motor core manufacturing device 1C relating to the present embodiment, the structures that differ from the above-described motor core manufacturing device 1. Structural elements that are similar to the motor core manufacturing device 1 are denoted by the same reference numerals, and description thereof is omitted.

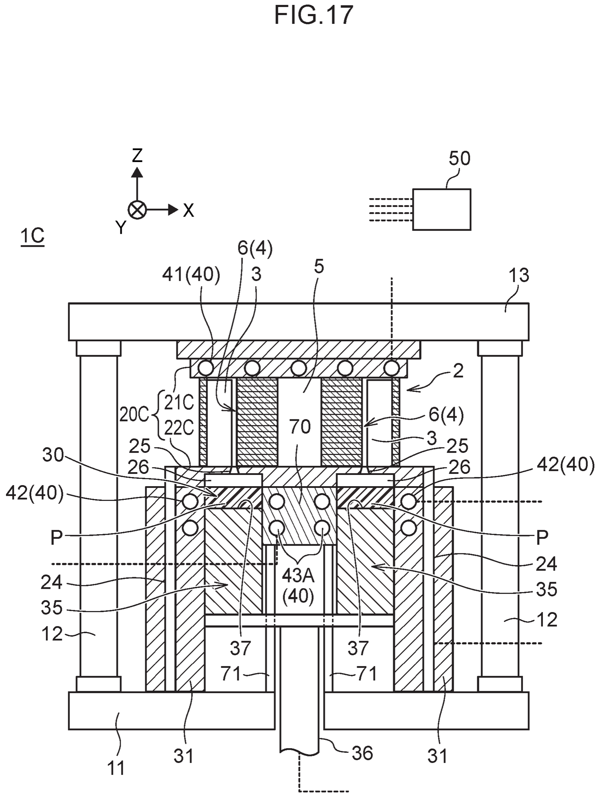

Fig. 17 is a schematic explanatory drawing illustrating an example of the motor core manufacturing device relating to the third embodiment of the present disclosure. The mold 20C included in the motor core manufacturing device 1C relating to the present embodiment includes the lower mold 22C serving as an example of the first mold and positioned at the lower end side in the axial direction of the rotor core 2, and an upper mold 21C serving as an example of the second mold and positioned at the upper end side in the axial direction of the rotor core 2. Thereamong, the upper mold 21C may be similar to the upper mold 21 of the motor core manufacturing device 1 relating to the first embodiment.

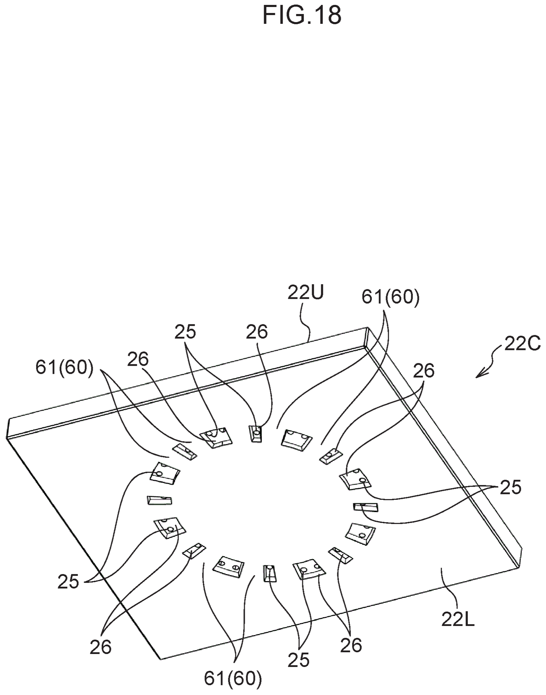

Fig. 18 is a perspective view illustrating an example of the lower mold illustrated in Fig. 17. As illustrated in Fig. 17 and Fig. 18, the lower mold 22C differs from the above-described lower mold 22 with regard to the point that the lower surface 22L thereof is structured substantially by a flat surface, except for the portions where the resin fill paths 25 are formed. Due to this structure, a lower mold 22D demarcates the upper surface of the chamber 30, but does not demarcate the inner peripheral surface of the chamber 30.

As described above, the lower mold 22C of the present embodiment does not include the projecting portion 23 that the lower mold 22 of the first embodiment has. In relation thereto, in the motor core manufacturing device 1C relating to the present embodiment, the block body 70 that demarcates the inner peripheral surface of the chamber 30 is disposed at the central portion of the supporting stand 31 that is substantially annular and structures the chamber 30.

The block body 70 can be structured by a block body that is substantially solid cylindrical for example, and the diameter thereof may be adjusted to a diameter that is slightly smaller than the inner diameter of the annular plunger 35. Further, the proximal end portion of the block body 70 may be disposed at an arbitrary height position by plural supporting rods 71 that have predetermined lengths and are disposed at the base 11. Further, chamber inner periphery heaters 43A that structure some of the heaters 40 may be disposed at the interior of the block body 70.

In accordance with the motor core manufacturing device 1C relating to the present embodiment that has the above-described structure, effects that are similar to the effects described in the first and second embodiments can be obtained. In addition thereto, in accordance with the motor core manufacturing device 1C relating to the present embodiment, due to the block body 70 being provided, at the time when the annular resin material P is placed within the chamber 30 for example, the annular resin material P can be placed in a space that is demarcated by the inner peripheral surface of the chamber 30 in addition to the outer peripheral surface thereof, and therefore, the workability improves. Further, because the block body 70 is fixed to the base 11 and does not operate, the work for wiring the chamber inner periphery heaters 43A that are disposed within the block body 70 is easy. Moreover, because the block body 70 is fixed to the base 11, the clearance between the block body 70 and the side surface of the annular plunger 35 can be made to be narrow. Due thereto, the softened resin P1 can be prevented from leaking-out from the gap between the block body 70 and the annular plunger 35.

The steps of manufacturing a motor core by using the motor core manufacturing device 1C relating to the present embodiment may be similar to the steps of the motor core manufacturing method relating to the first embodiment. Accordingly, detailed description thereof is omitted here.

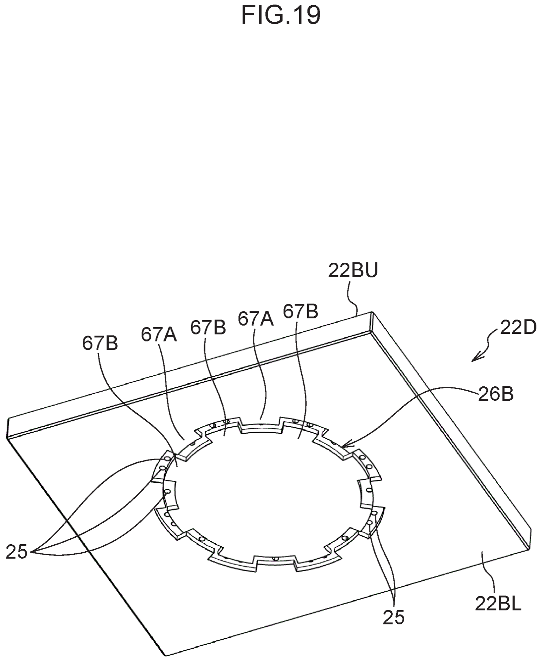

Fig. 19 is a perspective view illustrating a modified example of the lower mold of the motor core manufacturing device illustrated in Fig. 17. In the above-described third embodiment as well, in the same way as the example illustrated in Fig. 16, the convex portions 60 can be formed at a side surface of the chamber. Specifically, as illustrated in Fig. 19, the lower mold 22D relating to the present modified example may be structured by a plate-shaped member having a predetermined wall thickness, and the resin flow-in groove 26B, which communicates with the resin fill paths 25 that connect from the lower surface 22BL to the upper surface 22BU, may be formed in the lower mold 22D.

Further, as illustrated in Fig. 19, the seventh convex portions 67A, 67B may be formed respectively in the outer peripheral wall surface and the inner peripheral wall surface, which extend in the vertical direction, of the resin flow-in groove 26B that also serves as an upper portion of the chamber 30, at portions other than the regions where the resin fill paths 25 are formed. By providing the seventh convex portions 67A, 67B as well, it can be anticipated that effects similar to the effects described in the above-described respective embodiments will be achieved. Namely, the amount of resin that hardens outside of the slot portions 4 at the time of resin filling can be reduced.

The present disclosure is not limited to the above-described embodiments, and can be implemented by being changed in various ways within a scope that does not depart from the gist of the present disclosure. Further, all of these are included in the technical concept of the present disclosure. Moreover, in the present disclosure, there may be only one of each of the structural elements or there may be two or more thereof, provided that a contradiction does not arise.

All publications including periodicals, patent applications and patents that are cited in the present specification are incorporated by reference herein to the same extent as if each publication were to be individually and specifically presented and incorporated by reference or all of the contents thereof were to be described herein.

The use of nouns and similar instructions that are used in relation to the description of the present disclosure (in relation to the following Claims in particular) is to be interpreted as covering both singular and plural forms, provided that such is not specified otherwise in the present specification nor is in obvious contradiction to the context. The words and phrases "equipped with", "having", "including" and "incorporating" are to be interpreted as open-ended terms (i.e., meaning "including ... but not limited thereto"), unless otherwise specified. The stating of numerical value ranges in the present specification is merely intended to function as shorthand notation for individually mentioning the corresponding respective values within the range, and each value is incorporated into the present specification as if individually exemplified in the specification, unless otherwise noted in the specification. All of the methods described in the present specification can be carried out in any appropriate order, provided that such is not specified otherwise in the present specification nor is in obvious contradiction to the context. All examples and exemplifying expressions (e.g., "and the like") that are used in the present specification are, unless otherwise stated, merely intended to better explain the present disclosure and do not limit the scope of the present disclosure. All expressions in the specification as well are not to be interpreted as meaning that elements that are not recited in the Claims are indispensable to implementation of the present disclosure.

The present specification includes best forms known by the present inventors for implementing the present disclosure, and preferred embodiments of the present disclosure are described. Modifications of these preferred embodiments will be clear to those skilled in the art upon reading the above description. The present inventors anticipate that experts will appropriately apply such modifications, and intend that the present disclosure will be implemented by methods other than those specifically described in the present specification. Accordingly, the present disclosure includes all alterations and equivalents of the contents recited in the Claims appended to the present specification as permitted by governing law. Moreover, all combinations of the above-described elements in all of the modifications also are incorporated into the present disclosure, provided that such is not otherwise specified in the specification nor is in obvious contradiction to the context.

## Claims

1. A motor core manufacturing device, comprising:
a mold capable of holding a motor core that includes a plurality of resin fill portions disposed in an annular form at a predetermined interval, the mold including a first mold positioned at one end portion side in an axial direction of the motor core, and a second mold positioned at another end portion side in the axial direction of the motor core;
an annular chamber communicating with resin fill paths, which are formed in the first mold and which have end portions capable of communicating with the plurality of resin fill portions respectively, wherein an annular resin material of a predetermined wall thickness can be accommodated in an interior of the annular chamber;
an annular plunger that is movable within the annular chamber; and
one or a plurality of convex portions projecting toward an inner side of the annular chamber from an inner surface within the annular chamber, except at portions that communicate with the resin fill paths.

2. The motor core manufacturing device of claim 1, wherein the annular chamber is formed at a position that, as seen in plan view, overlaps with the resin fill portions of the motor core held in the mold, and the resin fill paths are structured by a plurality of passages that extend in a vertical direction from an upper surface or a lower surface of the annular chamber toward the resin fill portions.

3. The motor core manufacturing device of claim 1 or claim 2, wherein the convex portion includes first convex portions formed at positions of a surface, which faces the annular plunger, of the first mold except at regions that communicate with the resin fill paths, and the first convex portions extend in a direction intersecting with the surface, which faces the annular plunger, of the first mold.

4. The motor core manufacturing device of claim 3, wherein side walls of the resin fill paths have tapered surfaces that are inclined at a first angle with respect to an extending direction of the resin fill paths such that diameters thereof become smaller from one openings that communicate with the annular chamber toward other openings that communicate with the plurality of resin fill portions, and side walls of the first convex portions have tapered surfaces that are inclined at a second angle, which is smaller than the first angle, with respect to the extending direction of the resin fill paths such that surface areas of the first convex portions become smaller toward distal ends of the side walls of the first convex portions.

5. The motor core manufacturing device of claim 3, wherein the convex portions further include second convex portions that are formed at some positions of a surface, which faces the first mold, of the annular plunger except at regions that face the first convex portions, and the second convex portions extend in a direction intersecting with the surface, which faces the first mold, of the annular plunger.

6. The motor core manufacturing device of claim 5, wherein side walls of the resin fill paths have tapered surfaces that are inclined at a first angle with respect to an extending direction of the resin fill paths such that diameters thereof become smaller from one openings that communicate with the annular chamber toward other openings that communicate with the plurality of resin fill portions, side walls of the first convex portions have tapered surfaces that are inclined at a second angle, which is smaller than the first angle, with respect to the extending direction of the resin fill paths such that surface areas of the first convex portions become smaller toward distal ends of the side walls of the first convex portions, and side walls of the second convex portions have tapered surfaces that are inclined at a third angle, which is smaller than the second angle, with respect to the extending direction of the resin fill paths such that surface areas of the second convex portions become smaller toward distal ends of the side walls of the second convex portions.

7. The motor core manufacturing device of claim 1 or claim 2, wherein the convex portions include third convex portions that are formed at positions of a surface, which faces the first mold, of the annular plunger except at regions that face the resin fill paths, and the third convex portions extend in a direction intersecting with the surface, which faces the first mold, of the annular plunger.

8. The motor core manufacturing device of claim 7, wherein side walls of the resin fill paths have tapered surfaces that are inclined at a first angle with respect to an extending direction of the resin fill paths such that diameters thereof become smaller from one openings that communicate with the annular chamber toward other openings that communicate with the plurality of resin fill portions, and side walls of the third convex portions have tapered surfaces that are inclined at a fourth angle, which is smaller than the first angle, with respect to the extending direction of the resin fill paths such that surface areas of the third convex portions become smaller toward distal ends of the side walls of the third convex portions.

9. A motor core manufacturing method, comprising:
a step of placing an annular resin material of a predetermined wall thickness within an annular chamber, wherein one or a plurality of convex portions, which are formed so as to project toward an inner side of the annular chamber, are formed at an inner surface within the annular chamber except at portions that communicate with resin fill paths;
a step of holding a motor core, which includes a plurality of resin fill portions disposed in an annular form at a predetermined interval, within a mold in which are formed the resin fill paths that communicate with the annular chamber, such that end portions of the resin fill paths communicate with the plurality of resin fill portions;
a step of heating and softening the annular resin material that is within the annular chamber;
a step of operating an annular plunger in a direction that approaches the mold, and filling, into the plurality of resin fill portions, softened resin that is formed from the annular resin material that was softened within the annular chamber; and
a step of hardening the softened resin that has been filled into the plurality of resin fill portions.
